Europäisches Patentamt

European Patent Office

Office européen des brevets

(11) Veröffentlichungsnummer: **0 520 138 A1**

## (12) EUROPÄISCHE PATENTANMELDUNG

(21) Anmeldenummer: **92103495.5**

(22) Anmeldetag: **29.02.92**

(51) Int. Cl.5: **D06C 3/02**, F16G 13/00

(30) Priorität: **06.06.91 DE 4118505**

(43) Veröffentlichungstag der Anmeldung:
**30.12.92 Patentblatt 92/53**

(84) Benannte Vertragsstaaten:
**AT BE CH DE ES FR GB IT LI**

(71) Anmelder: **A. Monforts GmbH & Co**
**Schwalmstrasse 301**
**W-4050 Mönchengladbach 2(DE)**

(72) Erfinder: **Röntgen, Manfred**
**Gabelsberger Strasse 48**
**W-4050 Mönchengladbach 1(DE)**

(74) Vertreter: **von Creytz, Dietrich, Dipl.-Phys.**
**Tannenweg 25**
**W-5144 Wegberg(DE)**

(54) **Schmierkanal.**

(57) Das Schmieren der Kugellager der Laufrollen einer Rollenkette eines Spannrahmens wird erleichtert, wenn als Schmierkanal eine etwa parallel zu der Rollenachse durch eine Lasche der Rollenkette und durch einen Dichtungsring des Kugellagers in dieses hineinführende Bohrung vorgesehen wird. Der Schmierkanal läßt sich bei der Herstellung selbsttätig mit einer Rückschlagklappe gegen den ungewollten Austritt eingepreßten Fetts ausstatten, wenn der Dichtungsring (16) des Kugellagers im Spritzgußverfahren hergestellt und die Teilungsebene (17) der Spritzwerkzeuge etwa in die dem Kugellager abgewendete Oberseite des Dichtungsrings gelegt wird sowie wenn beim Spritzen entstehende Spritzgrate (19) innerhalb der Bohrung bewußt stehengelassen werden.

Fig.2

Fig.3

Rank Xerox (UK) Business Services

EP 0 520 138 A1

Die Erfindung betrifft einen Schmierkanal des Rollenlagers einer Spannrahmenkette zum kontinuierlichen Führen und/oder Breitstrecken einer textilen Stoffbahn in einer Stoffbahnspannmaschine, wobei die Kette aus verbunden über Kettengelenke abwechselnd aufeinanderfolgenden Innen und Außengliedern besteht, wobei jedes Innenglied zwei Innenlaschen sowie zwei die Laschen miteinander verbindende Hülsen und jedes Außenglied zwei Außenlaschen sowie zwei die Außenlaschen miteinander verbindende Gelenkbolzen aufweist, wobei jede Hülse drehbar auf dem zugehörigen Bolzen gelagert ist, wobei außen auf der Hülse eine Laufrolle in einem über den Schmierkanal von außen zu schmierenden Kugellager drehbar gelagert ist und wobei der Schmierkanal unmittelbar von außen durch eine der beiden Laschen des Innenglieds und durch einen an die Lasche angrenzenden, in Bezug auf die Innenlasche stillstehenden Dichtungsring des Kugellagers in das letzere führt

In einem solchen, in der DE-OS 39 16 714 beschriebenen Anordnung wird zum Nachschmieren des Kugellagers ein Schmierkanal vorgesehen, der aus einer ersten Bohrung der Innenlasche und einer fluchtend daran anschließenden zweiten Bohrung eines Dichtungsrings des Kugellagers besteht. Der Schmierkanal kann in der ersten und zweiten Bohrung parallel zur Längsachse des Gelenkbolzens verlaufen, es können aber - wegen der besseren äußeren Zugänglichkeit - auch Schrägverläufe im Bereich der ersten und/oder zweiten Bohrung, also in der Lasche bzw. im Dichtungsring, mit Neigungen von bis zu 45° gegen die Längsachse des Bolzens vorgesehen werden. Da die die beiden Bohrungen aufweisenden Teile der Anordnung bei Betrieb gegeneinander nicht verdreht werden, bilden sie einen faktisch einteiligen Durchgang als Schmierkanal. Der Durchgang führt von der Außenseite der Innenlasche aus direkt in das Innere des Kugellagers. Es bereitet keine Schwierigkeiten, durch einen solchen "festen" Kanal neues Fett in das Kugellager einzutreiben.

Um zu verhindern, daß das Fett im Betrieb des Kugellagers aus dem festen Schmierkanal selbsttätig austritt, wird der Kanalausgang im Bekannten zusätzlich mit Hilfe einer Lasche verschlossen.

Die im Dichtungsring des Kugellagers erforderliche Bohrung, die den zweiten, inneren Teil des Schmierkanals darstellt, muß natürlich in genauer Fortsetzung der Bohrung der Innenlasche fluchten. Das Herstellen dieser fluchtenden Bohrung erfordert einen zusätzlichen Arbeitsgang.

Der Erfindung liegt die Aufgabe zugrunde, den Aufwand zum Herstellen des Dichtungsrings einschließlich des durch den Dichtungsring führenden Teils des Schmierkanals zu vermindern. Die erfindungsgemäße Lösung besteht darin, daß ein im Spritzgrußverfahren mit im wesentlichen quer zur Durchflußrichtung des Schmierkanals liegender Teilungsebene der Spritzwerzeuge hergestellter Dichtungsring vorgesehen ist und daß in der spritzgußtechnisch bedingten Teilungsebene innerhalb des Schmierkanals von dessen Wänden im wesentlichen umlaufend radial nach innen gerichtete Spritzgrate als Rückschlagklappe vorgesehen sind.

Demgemäß enthält der erfindungsgemäße Schmierkanal eine als umlaufender, radial nach innen gerichteter Spritzgrat ausgebildete Rückschlagklappe, die einen ungewollten Austritt des Schmierfetts aus dem Kugellager im wesentlichen verhindert. Durch die Erfindung wird erreicht, daß der Dichtungsring des Kugellagers in wenig aufwendiger Weise gewissermaßen als Anfall des Spritzgußverfahrens herzustellen ist. Die dabei in dem dünnen Schmierkanal an der Teilung der Spritzwerzeuge entstehenden Spritzgrate sollen - anders als üblich - nicht entfernt werden, sondern stehenbleiben und durch ihre Existenz einen zusätzlichen Vorteil bringen, nämlich einen wesentlichen selbsttätigen Rückstrom von einmal in das Kugellager eingepreßtem Fett ausschließen.

Die beim Spritzgußverfahren normalerweise als nachteilig empfundenen Spritzgrate werden erfindungsgemäß bewußt erzeugt bzw. gefördert und/oder einfach stehengelassen, so wie sie sind. Das Einsparen eines Arbeitsgangs führt also überraschend zu einem weiteren Vorteil, nämlich der Ersparnis einer äußeren Abdichtung des Schmierkanals. Demgemäß kann die Erfindung auch als Verwendung von spritzgußtechnisch bedingten Spritzgraten als Rückschlagventilklappe eines Schmierkanals beschrieben werden.

Die Teilungsebene der Spritzwerzeuge des erfindungsgemäß herzustellenden Dichtungsrings kann bevorzugt auch mit Rücksicht auf eine günstige Position der aus Spritzgraten bestehenden Rückschlagklappe ausgewählt werden. Vorzugsweise soll die Teilungsebene in der Ebene der - in Bezug auf das Kugellager - äußeren Oberfläche des Dichtungsrings liegen.

Anhand der schematischen Darstellung eines Ausführungsbeispiels werden Einzelheiten der Erfindung erläutert. Es zeigen:

Fig. 1      einen Teil einer Rollenkette mit Rollenlager in einem Schnitt senkrecht zur Laufrollenachse;

Fig. 2      eine vergrößerte Darstellung eines im Spritzgußverfahren hergestellten Dichtungsrings mit Schmierkanal nach Fig. 1; und

Fig. 3      einen Schnitt durch den Schmierkanal in der Spritzgußteilungsebene.

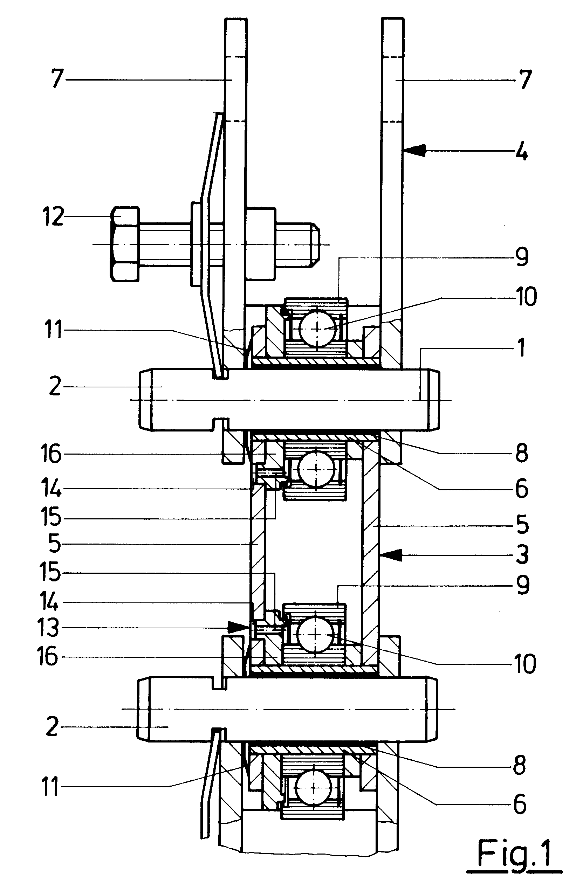

Fig. 1 zeigt einen Teil einer Rollenkette in einem Schnitt senkrecht zur Laufrollenachse bzw. Längsachse 1 eines Gelenkbolzens 2. Die Rollenkette besteht aus insgesamt mit 3 bezeichneten Innengliedern und insgesamt mit 4 bezeichneten Außengliedern. Jedes Innenglied 3 besteht aus zwei Innenlaschen 5 sowie aus zwei die Laschen 5 miteinander verbindenden Hülsen 6. Jedes Außenglied 4 besteht aus zwei Außenlaschen 7 sowie aus zwei die Außenlaschen 7 miteinander verbindenden Gelenkbolzen 2. Jede Hülse 6 wird drehbar auf dem zugehörigen Gelenkbolzen 2 gelagert. Die erforderliche Relativdrehbarkeit von Gelenkbolzen 2 und Hülse 6 wird gewährleistet durch eine zwischengesetzte Gleitbuchse 8, ein Kugel- oder Nadellager oder dergleichen.

Außen auf der Hülse 6 wird koaxial eine Laufrolle 9 in einem von außen zu schmierenden Kugellager 10 drehbar gelagert. Ein zwischen Außenlaschen 7 und Innenlaschen 5 am Bolzenumfang für eine freie Beweglichkeit erforderliches Spiel wird mit Hilfe eines Federblatts 11 elastisch aufgefangen. An der Rollenkette, vorzugsweise an den Laschen 7 der Außenglieder 4, werden (nicht gezeichnete) Nadel- oder Kluppenglieder zum Festhalten eines Stoffbahnrandes mit Hilfe einer durch einen Schraubbolzen 12 symbolisierten Vorrichtung befestigt.

Die in dem Kugellager 10 drehbare Laufrolle 9 läuft bei Betrieb an einer Schiene am Längsrand des Behandlungsraums der Spannmaschine ab. Bei Transportgeschwindigkeiten von z.B. 200 m/min und Rollendurchmessern von z.B. 8 cm ergeben sich Umdrehungsgeschwindigkeiten der Rolle 9 von ca. 13 Umdrehungen/sec, so daß ständig für eine ausgezeichnete Schmierung des Kugellagers 10 zu sorgen ist.

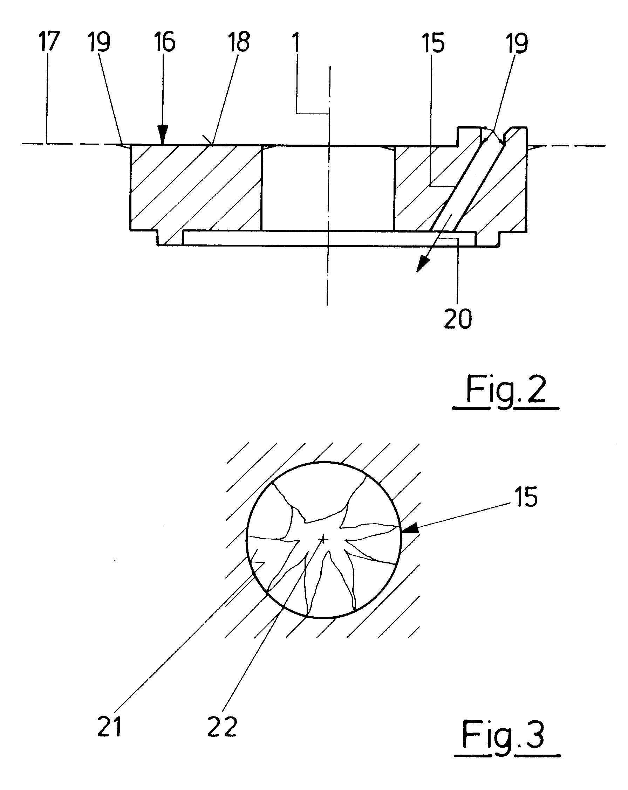

Demgemäß wird zum Nachschmieren des Kugellagers 10 ein insgesamt mit 13 bezeichneter Schmierkanal vorgesehen, der aus einer ersten Bohrung 14 der Innenlasche 5 und einer mit der ersten Bohrung fluchtenden zweiten Bohrung 15 eines Dichtungsrings 16 des Kugellagers 10 besteht. Der Dichtungsring 16 kann bevorzugt einteilig an die Hülse 6 angeformt werden. Die Einzelheiten hierzu werden in Fig. 2 vergrößert dargestellt.

Im Ausführungsbeispiel nach Fig. 2 verläuft der als zweite Bohrung 15 bezeichnete Teil des Schmierkanals 13 mit einer Neigung von etwa 30° gegen die Längsachse 1 des Gelenkbolzens. Erfindungsgemäß wird der insgesamt mit 16 bezeichnete Dichtungsring im Spritzgußverfahren hergestellt, wobei die Teilung der Spritzwerkzeuge vorzugsweise in eine Ebene 17 längs der Oberfläche 18 des Dichtungsrings 16 gelegt wird. Die beim Spritzen im Bereich der Teilungsebene 17 entstehenden Spritzgrate 19 werden nach dem Lösen der Spritzwerkzeuge in der Bohrung 15 nicht entfernt. Dort werden die Spritzgrate 15 bewußt belassen bzw. durch Ausbildung der Spritzwerkzeuge sogar gefördert, weil sie erfindungsgemäß als Rückschlagklappe für das in Pfeilrichtung 20 in das Kugellager 10 einzupressende Schmierfett dienen sollen.

Die sich nach Fig. 3 von den Wänden 21 der Bohrung 15 umlaufend und im wesentlichen radial zur Bohrungsmittellinie 22 hin erstreckenden Spritzgrate 19 sollen so dünn, aber doch so stabil erzeugt werden, daß sie sich beim Einpressen des Fetts in das Kugellager 10 elastisch nach innen umlenken und bei Nachlassen des Einpreßdrucks wieder in die radiale Richtung zurückstellen. Die elastische Rückstellkraft der Spritzgrate 19 ist andererseits im allgemeinen so groß, daß sie dem bei Betrieb vom Lagerinnern her ausgeübten Druck des Schmierfetts im wesentlichen ohne Umlenken der Spritzgrate 19 (nach außen) widerstehen kann.

Bezugszeichenliste

| | | |
|---|---|---|
| 1 | = | Rollenachse |
| 2 | = | Bolzen |
| 3 | = | Innenglied |
| 4 | = | Außenglied |
| 5 | = | Innenlasche |
| 6 | = | Hülse |
| 7 | = | Außenlasche |
| 8 | = | Gleitbuchse |
| 9 | = | Laufrolle |
| 10 | = | Kugellager |
| 11 | = | Federblatt |
| 12 | = | Schraubbolzen |
| 13 | = | Schmierkanal |
| 14 | = | erste Bohrung |
| 15 | = | zweite Bohrung |
| 16 | = | Dichtungsring |
| 17 | = | Teilungsebene |
| 18 | = | Oberfläche (16) |
| 19 | = | Spritzgrad |
| 20 | = | Pfeil |
| 21 | = | Wand (15) |
| 22 | = | Mittellinie |

**Patentansprüche**

1. Schmierkanal des Rollenlagers einer Spannrahmenkette zum kontinuierlichen Führen und/oder Breitstrecken einer textilen Stoffbahn in einer Stoffbahnspannmaschine, wobei die Kette aus verbunden über Kettengelenke abwechselnd aufeinanderfolgenden Innen- und Außengliedern (3, 4) besteht, wobei jedes Innenglied (3) zwei Innenlaschen (5) sowie zwei die Laschen (5) miteinander verbindenden Hülsen (6) und jedes Außenglied (4) zwei Außenlaschen (7) sowie zwei die Außenlaschen (7) miteinander verbindenden Gelenkbolzen (2) aufweist, wobei jede Hülse (6) drehbar auf dem zugehörigen Bolzen (2) gelagert ist, wobei außen auf der Hülse (6) eine Laufrolle (9) in einem über den Schmierkanal (13) von außen zu schmierenden Kugellager (10) drehbar gelagert ist und wobei der Schmierkanal (13) unmittelbar von außen durch eine der beiden Laschen (5) des Innenglieds (3) und durch einen an die Lasche (5) angrenzenden, in Bezug auf die Lasche (5) stillstehenden Dichtungsring (16) des Kugellagers (10) in das letztere führt,
**dadurch gekennzeichnet,**
daß ein im Spritzgußverfahren mit im wesentlichen quer zur Durchflußrichtung des Schmierkanals (13, 15) liegender Teilungsebene (17) der Spritzwerkzeuge hergestellter Dichtungsring (16) vorgesehen ist und daß in der spritzgußtechnisch bedingten Teilungsebene (17) innerhalb des Schmierkanals (15) von dessen Wänden (21) im wesentlichen umlaufend radial nach innen gerichtete Spritzgrate (19) als Rückschlagklappe vorgesehen sind.

2.  Schmierkanal nach Anspruch 1,
    **dadurch gekennzeichnet,**
    daß die Teilungsebene (17) der Spritzwerkzeuge im wesentlichen in der Ebene der in Bezug auf das Kugellager äußeren Oberfläche (18) des Dichtungsring (16) liegt.

Fig.1

EP 0 520 138 A1

Fig.2

Fig.3

6

Europäisches
Patentamt

**EUROPÄISCHER RECHERCHENBERICHT**

Nummer der Anmeldung

EP 92 10 3495

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 916 714 (MONFORTS) ----- | | D 06 C 3/02<br>F 16 G 13/00 |

**RECHERCHIERTE SACHGEBIETE (Int. Cl.5)**

F 16 G
D 06 C
F 16 N
F 16 H

Der vorliegende Recherchenbericht wurde für alle Patentansprüche erstellt

| Recherchenort | Abschlußdatum der Recherche | Prüfer |
|---|---|---|
| DEN HAAG | 15-09-1992 | BARON C. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
...................................................................................................
& : Mitglied der gleichen Patentfamilie, übereinstimmendes
Dokument

EPO FORM 1503 03.82 (P0403)